(19) Europäisches Patentamt
European Patent Office
Office européen des brevets

(11) Veröffentlichungsnummer: **0 078 024**
**B1**

# (12) EUROPÄISCHE PATENTSCHRIFT

(45) Veröffentlichungstag der Patentschrift: **19.09.84**

(51) Int. Cl.³: **C 09 B 62/085,** C 09 B 62/51, D 06 P 3/66, D 06 P 3/10

(21) Anmeldenummer: **82109719.3**

(22) Anmeldetag: **21.10.82**

## (54) Wasserlösliche Monoazo-pyridonverbindungen, Verfahren zu ihrer Herstellung und ihre Verwendung als Farbstoffe.

(30) Priorität: **23.10.81 DE 3142035**

(43) Veröffentlichungstag der Anmeldung: **04.05.83 Patentblatt 83/18**

(45) Bekanntmachung des Hinweises auf die Patenterteilung: **19.09.84 Patentblatt 84/38**

(84) Benannte Vertragsstaaten: **CH DE FR GB IT LI**

(56) Entgegenhaltungen:
**FR - A - 2 430 442**

**CHEMICAL ABSTRACTS, Band 95, Nr. 8, August 1981, Seite 73, Nr. 63672c, COLUMBUS OHIO USA**
**CHEMICAL ABSTRACTS, Band 95, Nr. 24, Dezember 1981, Seite 75, Nr. 205410s, COLUMBUS OHIO USA**

(73) Patentinhaber: **HOECHST AKTIENGESELLSCHAFT, Postfach 80 03 20, D-6230 Frankfurt am Main 80 (DE)**

(72) Erfinder: **Kohlhaas, Folker, Dr., Akazienring 64, D-6203 Hochheim am Main (DE)**
Erfinder: **Meininger, Fritz, Dr., Loreleistrasse 7, D-6230 Frankfurt am Main 80 (DE)**

**EP 0 078 024 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung liegt auf dem technischen Gebiet der faserreaktiven Azofarbstoffe.

Aus der japanischen Offenlegungsschrift Sho-56-037 379 und aus der deutschen Offenlegungsschrift 2 050 901 sind bereits Azoverbindungen mit faserreaktiven Farbstoffeigenschaften bekannt, die eine Pyridon-Kupplungskomponente enthalten.

Mit der vorliegenden Erfindung wurden nunmehr neue, wertvolle wasserlösliche Monoazoverbindungen entsprechend der allgemeinen Formel (1)

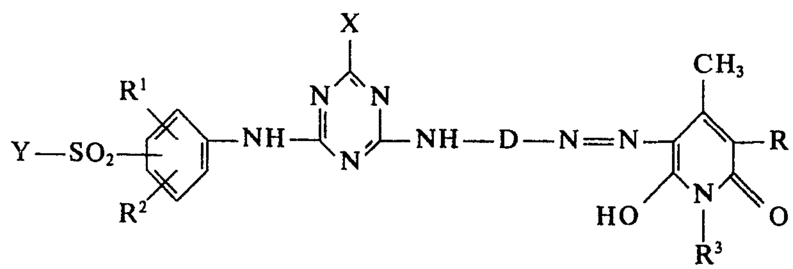 (1)

gefunden. In dieser Formel (1) bedeuten:

$R^1$ ist ein Wasserstoffatom, eine niedere Alkylgruppe, wie die Äthylgruppe und insbesondere Methylgruppe, eine niedere Alkoxygruppe, wie die Äthoxygruppe und insbesondere Methoxygruppe, oder ein Chloratom;

$R^2$ ist ein Wasserstoffatom, eine niedere Alkylgruppe, wie die Äthylgruppe und insbesondere Methylgruppe, oder eine niedere Alkoxygruppe, wie die Äthoxygruppe und insbesondere die Methoxygruppe;

$R^3$ ist ein Wasserstoffatom oder eine niedere Alkylgruppe, wie die Methyl- und Propyl- und insbesondere die Äthylgruppe, die durch eine Hydroxygruppe, eine niedere Alkanoylaminogruppe, wie die Propionylaminogruppe und insbesondere Acetylaminogruppe, eine Sulfatogruppe (der allgemeinen Formel $-OSO_3M$), eine Carboxygruppe (der allgemeinen Formel $-COOM$) oder eine Sulfogruppe (der allgemeinen Formel $-SO_3M$) substituiert sein kann, wobei in diesen Formeln

M ein Wasserstoffatom oder das Äquivalent eines ein-, zwei- oder dreiwertigen Metalls, insbesondere eines Alkali- oder Erdalkalimetalls, wie des Natriums, Kaliums oder Calciums, bedeutet;

R ist ein Wasserstoffatom, eine Sulfomethylgruppe (der allgemeinen Formel $-CH_2-SO_3M$ mit M der obengenannten Bedeutung) oder die Carbamoylgruppe oder bevorzugt die Cyangruppe oder insbesondere bevorzugt eine Sulfogruppe;

D ist der m- oder p-Phenylenrest, der durch eine oder zwei Sulfogruppen oder durch eine oder zwei Sulfogruppen und eine niedere Alkylgruppe, wie die Äthylgruppe und insbesondere die Methylgruppe, substituiert ist;

X ist eine Monosulfophenoxy-Gruppe, bevorzugt eine m-Sulfophenoxy- und insbesondere eine p-Sulfophenoxy-Gruppe;

Y ist die Vinylgruppe oder eine Äthylgruppe, die in β-Stellung einen als Anion alkalisch eliminierbaren Rest gebunden enthält, wie beispielsweise die β-Thiosulfatoäthyl-Gruppe (entsprechend der allgemeinen Formel $-CH_2-CH_2-S-SO_3M$ mit M der oben angegebenen Bedeutung), die β-Phosphatoäthyl-Gruppe (entsprechend der allgemeinen Formel $-CH_2-CH_2-OPO_3M_2$ mit M der obengenannten Bedeutung), die β-Chloräthyl-Gruppe, die β-Acetyloxyäthyl-Gruppe und vorzugsweise die β-Sulfatoäthyl-Gruppe (entsprechend der allgemeinen Formel $-CH_2-CH_2-OSO_3M$ mit M der obenangegebenen Bedeutung).

Die Formelglieder $R^1$, $R^2$, $R^3$ und R können zueinander gleiche oder voneinander verschiedene Bedeutungen haben.

Neben den bereits angegebenen bevorzugten Verbindungen der allgemeinen Formel (1) können noch zusätzlich solche erfindungsgemäßen Azoverbindungen hervorgehoben werden, in welchen das Formelglied $R^1$ ein Wasserstoffatom bedeutet, das Formelglied $R^2$ die Methoxy- oder die Methylgruppe, bevorzugt jedoch ein Wasserstoffatom ist und die Gruppe $-SO_2-Y$ in m-Stellung, insbesondere bevorzugt in p-Stellung zur Aminogruppe gebunden ist. Weiterhin sind diejenigen erfindungsgemäßen Azoverbindungen hervorzuheben, in denen das Formelglied D den durch eine oder zwei Sulfogruppen substituierten meta- oder para-Phenylenrest darstellt. Ebenso bevorzugt sind diejenigen erfindungsgemäßen Verbindungen, in denen das Formelglied Y die Vinylgruppe, insbesondere jedoch die β-Sulfatoäthyl-Gruppe bedeutet. Sofern der Formelrest $R^3$ eine substituierte Alkylgruppe von 1 bis 3 C-Atomen ist, ist diese bevorzugt durch eine Sulfogruppe, eine Carboxygruppe oder eine niedere Alkanoylaminogruppe substituiert.

Die Angaben »niedere« bedeuten hier wie im folgenden, daß der in der Gruppe enthaltene Alkyl-oder Alkylenrest aus 1 bis 4 C-Atomen besteht.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im Folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Azoverbindungen der allgemeinen Formel (1). Diese Verfahren sind dadurch gekennzeichnet, daß man eine Diazoniumverbindung eines Amins der allgemeinen Formel (2)

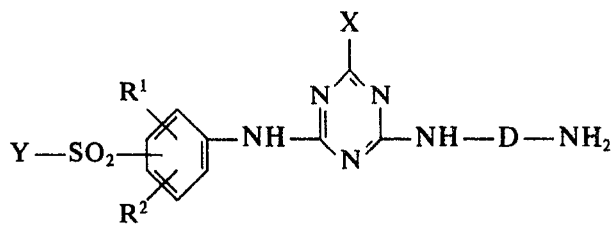

(2)

in welcher $R^1$, $R^2$, D, X und Y die obengenannten Bedeutungen haben, mit einer Pyridonverbindung der allgemeinen Formel (3)

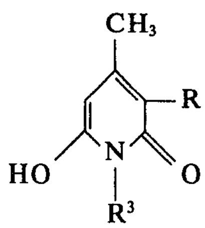

(3)

in welcher R und $R^3$ die obengenannten Bedeutungen haben, kuppelt, oder daß man eine Aminoazoverbindung der allgemeinen Formel (4)

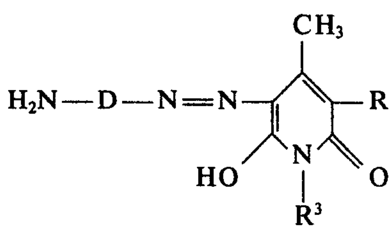

(4)

in welcher D, R und $R^3$ die obengenannten Bedeutungen haben, mit einer Monochlortriazin-Verbindung der allgemeinen Formel (5)

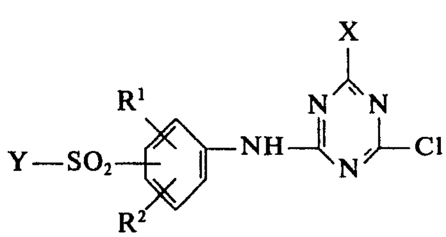

(5)

in welcher $R^1$, $R^2$, X und Y die obengenannten Bedeutungen haben, umsetzt.

In den Ausgangsverbindungen der Formeln (2) und (5) kann der Formelrest Y auch die $\beta$-Hydroxyäthyl-Gruppe bedeuten. Die so herstellbaren Verbindungen entsprechend der allgemeinen Formel (1), in welcher hier Y die $\beta$-Hydroxyäthyl-Gruppe bedeutet, lassen sich erfindungsgemäß mittels eines entsprechenden Veresterungs- oder Acylierungsmittels analog bekannten Verfahrensweisen in die entsprechenden erfindungsgemäßen Verbindungen der Formel (1) überführen, in welcher Y für eine Äthylgruppe steht, die in $\beta$-Stellung durch eine Estergruppe substituiert ist. Bevorzugt ist hierbei als Veresterung die Sulfatisierung, d. h. die Überführung der $\beta$-Hydroxyäthyl-Gruppe in die $\beta$-Sulfatoäthyl-Gruppe analog den zahlreichen aus der Literatur bekannten Verfahrensweisen, wobei als Sulfatisierungsmittel vorzugsweise konzentrierte Schwefelsäure oder Schwefeltrioxid enthaltende Schwefelsäure verwendet wird.

Die als Ausgangsverbindungen dienenden Amine der allgemeinen Formel (2) können analog bekannten Verfahrensweisen hergestellt werden, beispielsweise durch Umsetzung einer Monochlortriazinverbindung der allgemeinen Formel (5) mit einer Diaminoverbindung der oben definierten Formel $H_2N-D-NH_2$. Ebenso können analog bekannten Verfahrensweisen die als Ausgangsverbindungen dienenden Verbindungen der allgemeinen Formel (5) durch Kondensation von Dichlortriazinverbindungen der allgemeinen Formel (6)

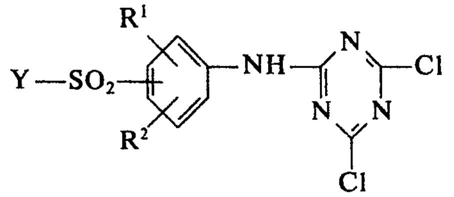

(6)

mit Y, $R^1$ und $R^2$ der obengenannten Bedeutung mit einer Phenolsulfonsäure, vorzugsweise der m- oder p-Phenol-sulfonsäure, hergestellt werden.

Die Herstellung der Ausgangsverbindungen der allgemeinen Formel (6) erfolgt ebenfalls analog bekannter Verfahrensweisen durch Umsetzung von Aminen der allgemeinen Formel (7)

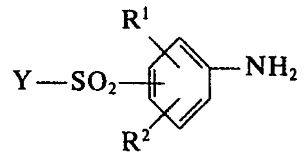

(7)

mit Y, $R^1$ und $R^2$ der oben angegebenen Bedeutung mit Cyanurchlorid (2,4,6-Trichlor-1,3,5-triazin).

Die Umsetzung von Cyanurchlorid mit einer Aminoverbindung der allgemeinen Formel (7) zur Verbindung der allgemeinen Formel (6) kann in organischem oder wäßrig-organischem Medium erfolgen. Vorzugsweise geschieht sie in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise solche des Natriums, Kaliums und Calciums sind; säurebindende Mittel sind ebenso tertiäre Amine, wie beispielsweise Pyridin oder Triäthylamin oder Chinolin. Diese Kondensationsreaktionen werden bei einer Temperatur zwischen −10°C und +40°C, vorzugsweise zwischen −10°C und +30°C, insbesondere bevorzugt bei einer Temperatur zwischen 0°C und +10°C, sowie bei einem pH-Wert zwischen 1,0 und 7,0, bevorzugt zwischen 3,5 und 5, durchgeführt.

Die Kondensation der Dichlortriazinylverbindungen der allgemeinen Formel (6) mit den Phenylendiaminsulfonsäuren kann ebenso in organischem oder wäßrig-organischem Medium erfolgen. Vorzugsweise wird sie jedoch in wäßrigem Medium durchgeführt, wobei, sofern erforderlich, ein säurebindendes Mittel, wie die obengenannten, zugegeben wird. Die Kondensation der Phenolsulfonsäuren mit den Monochlortriazinverbindungen wird bei einer Temperatur zwischen 10 und 60°C, vorzugsweise zwischen 25 und 45°C, und bei einem pH-Wert zwischen 5 und 8,5, insbesondere zwischen 6,5 und 8, durchgeführt.

Die Umsetzung der Monochlortriazinverbindungen der allgemeinen Formel (5) mit Diaminen der oben definierten allgemeinen Formel $H_2N-D-NH_2$ oder den Aminoazoverbindungen der allgemeinen Formel (4) kann ebenso in organischem oder wäßrig-organischem Medium erfolgen, vorzugsweise jedoch in wäßrigem Milieu, wobei, sofern erforderlich, ein säurebindendes Mittel, wie die obengenannten, zugesetzt wird. Die Umsetzung dieser Aminoverbindungen mit diesen Monochlortriazinylverbindungen wird bei einer Temperatur zwischen 20 und 80°C, vorzugsweise zwischen 30 und 70°C, und einem pH-Wert zwischen 2 und 8, insbesondere zwischen 2 und 6,5, durchgeführt.

Die Diazotierung der Aminoverbindungen der allgemeinen Formel (2) erfolgt analog bekannten Verfahrensweisen, beispielsweise in wäßrig-organischem und vor allem in wäßrigem, saurem Medium durch salpetrige Säure. Die Umsetzung der Diazoniumverbindungen mit den Pyridonverbindungen der allgemeinen Formel (3) wird ebenso analog bekannten Verfahrensweisen, beispielsweise in wäßrig-organischem, vorwiegend aber in wäßrigem Medium, im schwach sauren bis neutralen, gegebenenfalls sehr schwach alkalischem pH-Bereich ausgeführt.

Aminoverbindungen der allgemeinen Formel (7), die als Ausgangsverbindungen zur Herstellung der erfindungsgemäßen Verbindungen dienen, sind beispielsweise

1-Amino-3-(β-sulfatoäthylsulfonyl)-benzol, 1-Amino-2-methoxy-5-(β-sulfatoäthylsulfonyl)-benzol,
1-Amino-2-methoxy-4-(β-sulfatoäthylsulfonyl)-benzol,
1-Amino-2-methyl-5-(β-sulfatoäthylsulfonyl)-benzol,
1-Amino-2-methyl-4-(β-sulfatoäthylsulfonyl)-benzol,
1-Amino-4-methoxy-5-(β-sulfatoäthylsulfonyl)-benzol,
1-Amino-4-methyl-5-(β-sulfatoäthylsulfonyl)-benzol,
1-Amino-2-methoxy-5-methyl-4-(β-sulfatoäthylsulfonyl)-benzol,

1-Amino-2,5-dimethoxy-4-(β-sulfatoäthylsulfonyl)-benzol,
1-Amino-2,4-dimethoxy-5-(β-sulfatoäthylsulfonyl)-benzol,
1-Amino-2-methyl-5-methoxy-4-(β-sulfatoäthylsulfonyl)-benzol,
2-Chlor-1-amino-5-(β-sulfatoäthylsulfonyl)-benzol,
4-Chlor-1-amino-2-methyl-3-(β-sulfatoäthylsulfonyl)-benzol,
5-Chlor-1-amino-2-methoxy-4-(β-sulfatoäthylsulfonyl)-benzol, sowie bspw. die entsprechenden β-Thiosulfatoäthylsulfonyl-, β-Phosphatoäthylsulfonyl-, β-Chloräthylsulfonyl-, β-Acetoxyäthylsulfonyl- und Vinylsulfonyl-Derivate und gegebenenfalls β-Hydroxyäthylsulfonyl-Derivate dieser β-Sulfatoäthylsulfonyl-Verbindungen, des weiteren bevorzugt 1-Amino-4-(β-sulfatoäthylsulfonyl)-benzol und dessen entsprechende Thiosulfatoäthyl-, Phosphatoäthyl-, Chloräthyl-, Acetoxyäthyl- und Vinyl-Abkömmlinge und gegebenenfalls β-Hydroxyäthyl-Abkömmlinge.

Pyridonverbindungen entsprechend der allgemeinen Formel (3), die als Ausgangsverbindungen zur Herstellung der erfindungsgemäßen Azoverbindungen dienen, sind beispielsweise

4-Methyl-6-hydroxy-2-pyridon, 1,4-Dimethyl-6-hydroxy-2-pyridon,
1-Äthyl-4-methyl-6-hydroxy-2-pyridon, 3-Cyan-4-methyl-6-hydroxy-2-pyridon,
1,4-Dimethyl-3-cyan-6-hydroxy-2-pyridon, 1-Äthyl-3-cyan-4-methyl-6-hydroxy-2-pyridon,
3-Carbamoyl-4-methyl-6-hydroxy-2-pyridon,
1-Methyl-3-carbamoyl-4-methyl-6-hydroxy-2-pyridon,
1-Äthyl-3-carbamoyl-4-methyl-6-hydroxy-2-pyridon,
4-Methyl-6-hydroxy-2-pyridon-3-sulfonsäure, 1,4-Dimethyl-6-hydroxy-2-pyridon-3-sulfonsäure,
1-Äthyl-4-methyl-6-hydroxy-2-pyridon-3-sulfonsäure,
3-Sulfomethyl-4-methyl-6-hydroxy-2-pyridon, 3-Sulfomethyl-1,4-dimethyl-6-hydroxy-2-pyridon,
1-Äthyl-3-sulfomethyl-4-methyl-6-hydroxy-2-pyridon,
1-(β-Hydroxyäthyl)-3-(α-sulfoäthyl)-4-methyl-6-hydroxy-2-pyridon,
1-(β-Hydroxyäthyl)-4-methyl-6-hydroxy-2-pyridon,
1-(β-Hydroxyäthyl)-3-cyan-4-methyl-6-hydroxy-2-pyridon,
1-(β-Hydroxyäthyl)-3-carbamoyl-4-methyl-6-hydroxy-2-pyridon,
1-(β-Hydroxyäthyl)-4-methyl-6-hydroxy-2-pyridon-3-sulfonsäure,
1-(β-Sulfatoäthyl)-4-methyl-6-hydroxy-2-pyridon,
1-(β-Sulfatoäthyl)-3-cyan-4-methyl-6-hydroxy-2-pyridon,
1-(β-Sulfatoäthyl)-3-carbamoyl-4-methyl-6-hydroxy-2-pyridon,
1-(β-Sulfatoäthyl)-4-methyl-6-hydroxy-2-pyridon-3-sulfonsäure,
1-(β-Sulfoäthyl)-4-methyl-6-hydroxy-2-pyridon,
1-(β-Sulfoäthyl)-3-carbamoyl-4-methyl-6-hydroxy-2-pyridon,
1-(β-Sulfoäthyl)-4-methyl-6-hydroxy-2-pyridon-3-sulfonsäure,
1-Carboxy-methyl-4-methyl-6-hydroxy-2-pyridon,
1-Carboxymethyl-3-cyan-4-methyl-6-hydroxy-2-pyridon,
1-Carboxymethyl-3-carbamoyl-4-methyl-6-hydroxy-2-pyridon,
1-Carboxymethyl-4-methyl-6-hydroxy-2-pyridon-3-sulfonsäure,
1-(β-Carboxyäthyl)-4-methyl-6-hydroxy-2-pyridon,
1-(β-Carboxyäthyl)-3-cyan-4-methyl-6-hydroxy-2-pyridon,
1-(β-Carboxyäthyl)-3-carbamoyl-4-methyl-6-hydroxy-2-pyridon,
1-(β-Carboxyäthyl)-4-methyl-6-hydroxy-2-pyridon-3-sulfonsäure,
1-(β-Acetylaminoäthyl)-4-methyl-6-hydroxy-2-pyridon,
1-(β-Acetylaminoäthyl)-3-cyan-4-methyl-6-hydroxy-2-pyridon,
1-(β-Acetylaminoäthyl)-3-carbamoyl-4-methyl-6-hydroxy-2-pyridon,
1-(β-Acetylaminoäthyl)-4-methyl-6-hydroxy-2-pyridon-3-sulfonsäure,
1-(β-Acetylaminopropyl)-4-methyl-6-hydroxy-2-pyridon,
1-(β-Acetylaminopropyl)-3-cyan-4-methyl-6-hydroxy-2-pyridon,
1-(β-Acetylaminopropyl)-3-carbamoyl-4-methyl-6-hydroxy-2-pyridon und
1-(β-Acetylaminopropyl)-4-methyl-6-hydroxy-2-pyridon-3-sulfonsäure.

Die Diaminoverbindungen entsprechend der oben angegebenen allgemeinen Formel $H_2N-D-NH_2$, die als Ausgangsverbindungen zur Herstellung der erfindungsgemäßen Azoverbindungen dienen können, sind beispielsweise

1,3-Diaminobenzol-4-sulfonsäure, 1,3-Diaminobenzol-5-sulfonsäure,
1,4-Diaminobenzol-2-sulfonsäure, 2,4-Diaminotoluol-5-sulfonsäure,
2,4-Diamino-toluol-6-sulfonsäure, 2,5-Diaminotoluol-4-sulfonsäure,
1,3-Diaminobenzol-4,6-disulfonsäure und 1,4-Diaminobenzol-2,5-disulfonsäure.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert.

Hydroxygruppenhaltige Materialien sind solche natürlichen oder synthetischen Ursprungs, wie beispielsweise Cellulosefasermaterialien oder deren Regeneratprodukte und Polyvinylalkohole, Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der allgemeinen Formel (1) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 60 und 105°C, gegebenenfalls bei Temperaturen bis zu 120°C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschließendes Dämpfen bei 100 bis 103°C, oder zweiphasig, beispielsweise durch Bedrukken mit neutraler oder schwach saurer Druckfarbe und anschließendem Fixieren entweder durch Hindurchführen durch ein heißes elektrolythaltiges alkalisches Bad oder durch Überklotzen mit einer alkalischen, elektrolythaltigen Klotzflotte und anschließendem Verweilen dieses behandelten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumhydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der 3fach molaren Menge einer Aminobenzolsulfonsäure und/oder einer Aminonaphthalin-sulfonsäure und/oder auf Basis eines Umsetzungsproduktes von beispielsweise Stearylamin mit Äthylenoxid. In der Regel wird das zu färbende Material bei einer Temperatur von etwa 40° C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98° C durchgeführt. Die Färbungen können aber auch bei Siedetemperatur oder bei Temperaturen bis zu 120° C (unter Druck) ausgeführt werden.

Die mit den erfindungsgemäßen Verbindungen der allgemeinen Formel (1) hergestellten Färbungen und Drucke zeichnen sich in der Regel durch klare, grünstichig über rotstichig gelbe bis gelbstichig orange Nuancen und hohe Farbstärken aus. Die Färbungen und Drucke besitzen, insbesondere auf Cellulosefasermaterialien, eine sehr gute Lichtechtheit und gute bis sehr gute Naßechtheiten, wie beispielsweise Wasch-, Walk-, Wasser-, Seewasser-, Überfärbe- und Schweißechtheiten, desweiteren eine gute Plissierechtheit, Bügelechtheit und Reibechtheit.

Ebenso von Bedeutung ist die erfindungsgemäße Verwendung der Verbindungen der allgemeinen Formel (1) auch für das faserreaktive Färben von Wolle. Insbesondere läßt sich auf filzfrei oder filzarm ausgerüstete Wolle (vgl. bspw. H. Rath, Lehrbuch der Textilchemie, Springer-Verlag, 3. Auflage (1972), S. 295—299, insbesondere die Ausrüstung nach dem sogenannten Hercosett-Verfahren (S. 298); J. Soc. Dyers and Colourists 1972, 93—99, und 1975, 33—44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100° C durchgeführt, jedoch können sie auch in geschlossenen Färbeapparaturen bei Temperaturen bis zu 106° C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, klare grünstichig über rotstichig gelbe bis gelbstichig orange Färbungen. Bei Anwendung von Färbetemperaturen von 100 bis 106° C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60° C, auch von Färbungen in hohen Farbtiefen, zu nennen.

Die nachstehenden Beispiele dienen zur Erläuterung der Erfindung. Die Teile sind Gewichtsteile, die

Prozentangaben stellen Gewichtsprozente dar, sofern nicht anders vermerkt. Gewichtsteile beziehen sich zu Volumenteilen wie Kilogramm zu Liter.

Die in den nachstehenden Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

## Beispiel 1

a) Eine neutrale wäßrige Lösung von 56 Teilen 4-(β-Sulfatoäthylsulfonyl)-anilin in 300 Teilen Wasser wird unter kräftigem Rühren in eine Suspension von 38,6 Teilen Cyanurchlorid und 1 Teil eines handelsüblichen Netzmittels in 50 Teilen Wasser und 200 Teilen Eis laufen gelassen. Mit Natriumbicarbonat wird während der Acylierungsreaktion der pH-Wert zwischen 2 und 4 gehalten; die Temperatur beträgt anfangs 0°C, später 10°C. Unter Erwärmen auf 25°C werden nunmehr 35 Teile p-Phenolsulfonsäure in Form einer konzentrierten wäßrigen Lösung hinzugegeben und der pH-Wert mit Natriumcarbonat auf 7,5 gestellt; bis zum Ende dieser zweiten Kondensationsreaktion wird unter diesen Bedingungen weiter gerührt.

b) Die unter a) erhaltene Lösung wird bei 50°C in eine neutrale, wäßrige Lösung von 37,5 Teilen 1,3-Phenylendiamin-4-sulfonsäure getropft. Nach dem Ende dieser dritten Acylierungsreaktion wird das Reaktionsgemisch abgekühlt und mit 100 Teilen Eis und 50 Teilen einer 31%igen wäßrigen Salzsäure versetzt und mittels einer wäßrigen Lösung von 12,5 Teilen Natriumnitrit diazotiert.

c) Zu der unter b) hergestellten Diazoniumsalzlösung/-suspension werden 39,5 Teile 1,4-Dimethyl-6-hydroxy-2-pyridon-3-sulfonsäure eingetragen; während dieser Kupplungsreaktion wird der pH-Wert mit Natriumbicarbonat zwischen 5 und 5,5 gehalten.

Die so hergestellte erfindungsgemäße Monoazoverbindung wird in üblicher Weise isoliert, beispielsweise durch Eindampfen der neutralen Lösung, durch Sprühtrocknen oder durch Aussalzen mit einem Elektrolytsalz, wie beispielsweise Kaliumchlorid. Es wird ein gelbes Pulver isoliert, das das Natrium- oder Kaliumsalz der Verbindung der Formel

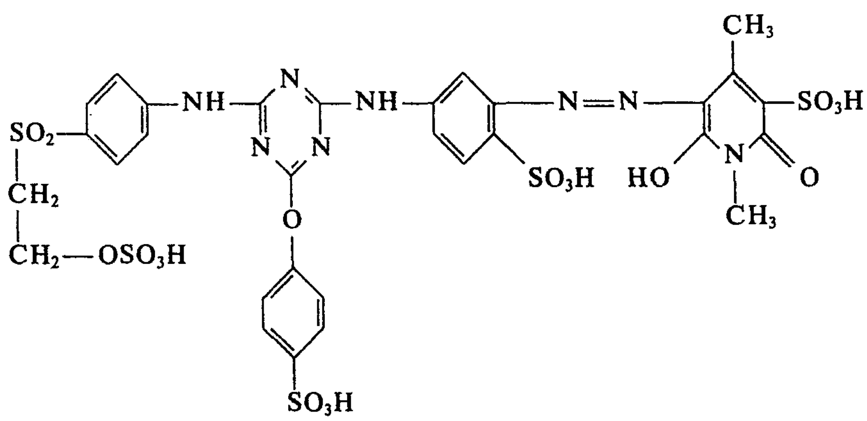

enthält. Diese erfindungsgemäße Azoverbindung zeigt, in Wasser gelöst, im Absorptionsspektrum ein Maximum bei 418 nm. Sie besitzt sehr gute Farbstoffeigenschaften und liefert auf den in der Beschreibung genannten Materialien, wie insbesondere Cellulosefasermaterialien, beispielsweise Baumwolle, nach den in der Technik, insbesondere für faserreaktive Farbstoffe, üblichen Applikations- und Fixiermethoden farbstarke, grünstichig gelbe Färbungen und Drucke von guter Lichtechtheit und von guten Naßechtheitseigenschaften, wie insbesondere guten Wasch-, Walk-, Überfärbe-, Chlorbadewasser- und Schweißechtheiten.

## Beispiel 2

a) Eine neutrale Lösung von 54 Teilen 1,4-Phenyldiamin-2,5-disulfonsäure in 200 Teilen Wasser wird nach Zugabe von 200 Teilen Eis und 70 Teilen 31%iger Salzsäure mit einer wäßrigen Lösung von 14 Teilen Natriumnitrit diazotiert. Zur Kupplung werden 52 Teile 1-(β-Sulfoäthyl)-3-cyan-4-methyl-6-hydroxy-2-pyridon eingetragen und der pH-Wert während dieser Kupplungsreaktion mittels Natriumbicarbonat auf 5 bis 6 gehalten.

b) Die unter a) hergestellte Aminoazoverbindung wird, vorzugsweise in Form ihrer wäßrigen Syntheselösung, zu einer Lösung des zweifachen Acylierungsproduktes aus 4-(β-Sulfatoäthylsulfonyl)-anilin, Cyanurchlorid und p-Phenolsulfonsäure gegeben, das gemäß den Angaben des Beispiels 1a) hergestellt wurde. Zur Durchführung der dritten Acylierungsreaktion wird die Temperatur dieses Reaktionsgemisches auf 60° C erhöht und der pH-Wert während dessen mit Natriumbicarbonat zwischen 5,5 und 6 gehalten.

Die so hergestellte erfindungsgemäße Monoazoverbindung wird auf die übliche Weise isoliert, beispielsweise durch Sprühtrocknung oder durch Aussalzen mit Kaliumchlorid. Man erhält ein dunkelgelbes Pulver, das das Natrium- oder Kaliumsalz der Verbindung der Formel

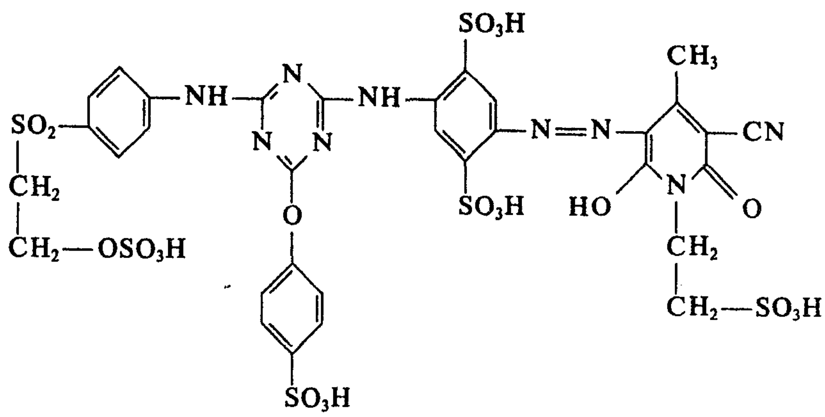

enthält. Diese erfindungsgemäße Azoverbindung zeigt, in Wasser gelöst, im sichtbaren Absorptionsbereich ein Absorptionsmaximum bei 439 nm. Sie zeigt sehr gute Farbstoffeigenschaften, insbesondere sehr gute faserreaktive Farbstoffeigenschaften, und liefert auf den in der Beschreibung genannten Materialien, wie insbesondere Cellulosefasermaterialien, beispielsweise auf Baumwolle, nach den in der Technik üblichen Applikations- und Fixiermethoden, insbesondere solchen, die für faserreaktive Farbstoffe beschrieben und angewandt werden, farbstarke, klare rotstichig gelbe Färbungen und Drucke von guten Lichtechtheiten und guten Naßechtheiten, wie insbesondere guten Wasch-, Walk-, Schweiß- und Überfärbeechtheiten.

## Beispiel 3

Man verfährt zur Herstellung einer erfindungsgemäßen Monoazoverbindung gemäß den Verfahrensangaben des Beispiels 1, verwendet jedoch dort unter a) anstelle des 4-(β-Sulfatoäthylsulfonyl)-anilins das 4-(β-Thiosulfatoäthylsulfonyl)-anilin in äquivalenter Menge.

Nach Aufarbeitung der Syntheselösung und Isolierung erhält man ein elektrolythaltiges Pulver mit dem Alkalimetallsalz der Verbindung der Formel

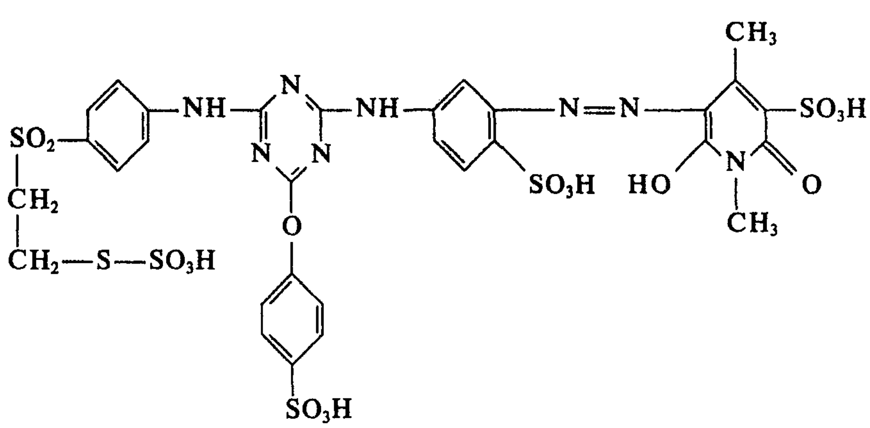

Diese erfindungsgemäße Azoverbindung zeigt in wäßriger Lösung bei 418 nm ein Absorptionsmaximum. Sie besitzt ebenfalls sehr gute Farbstoffeigenschaften und liefert beispielsweise auf Baumwolle nach den in der Technik üblichen Applikations- und Fixiermethoden, insbesondere solchen für faserreaktive Farbstoffe, farbstarke, grünstichig gelbe Färbungen und Drucke von guten Licht- und Naßechtheitseigenschaften, wie guten Wasch-, Walk- und Überfärbeechtheiten sowie guten Schweißechtheiten.

Beispiel 4

Zur Herstellung einer erfindungsgemäßen Azoverbindung verfährt man gemäß den Angaben des Beispiels 1, ersetzt jedoch dort bei der unter a) beschriebenen Verfahrensweise die wäßrige Lösung des 4-(β-Sulfatoäthylsulfonyl)-anilins durch eine Lösung von 39 Teilen 4-Vinylsulfonyl-anilin in 200 Volumenteilen Aceton.

Nach der üblichen Aufarbeitung der Syntheselösung und Isolierung erhält man ein elektrolythaltiges Pulver mit dem Alkalimetallsalz, wie beispielsweise Natriumsalz, der Verbindung der Formel

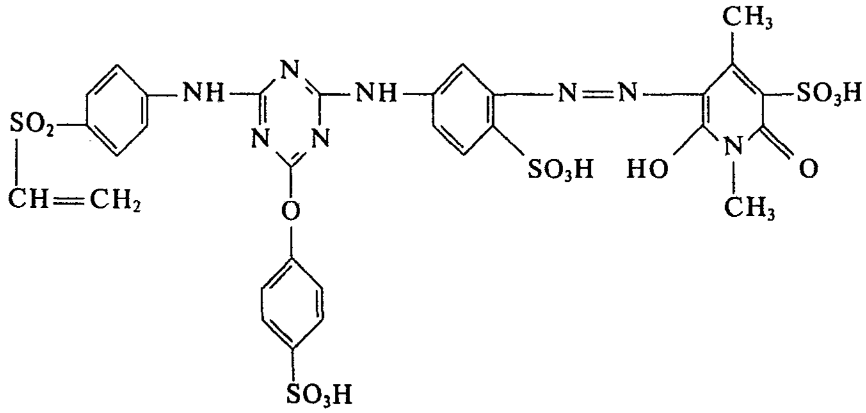

Diese hat in wäßriger Lösung im sichtbaren Absorptionsbereich ein Maximum bei 419 nm. Sie zeigt ebenfalls sehr gute faserreaktive Farbstoffeigenschaften und liefert nach den in der Technik üblichen Applikations- und Fixiermethoden beispielsweise auf Baumwolle kräftige, grünstichig gelbe Färbungen und Drucke von guten Licht- und Naßechtheitseigenschaften, deren Qualität derjenigen der Färbungen und Drucke gleich ist, die mit der erfindungsgemäßen Azoverbindung des Beispieles 1 erhalten werden.

Beispiel 5

Zur Herstellung einer erfindungsgemäßen Azoverbindung verfährt man gemäß den Verfahrensangaben des Beispiels 1, ersetzt jedoch dort bei dem unter a) angegebenen Verfahrensschritt die wäßrige Lösung des 4-(β-Sulfatoäthylsulfonyl)-anilins durch 46 Teile pulverförmiges 4-(β-Chloräthylsulfonyl)-anilin.

Nach Aufarbeitung der Syntheselösung und Isolierung erhält man ein elektrolythaltiges Pulver mit dem Alkalimetallsalz der Verbindung der Formel

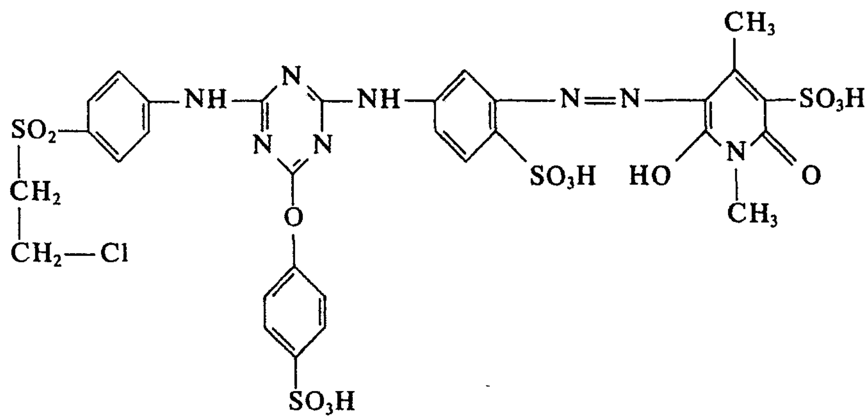

die ebenfalls ein Absorptionsmaximum in wäßriger Lösung bei 418 nm besitzt. Sie hat sehr gute Farbstoffeigenschaften und liefert beispielsweise auf Baumwolle nach den in der Technik für faserreaktive Farbstoffe üblichen Applikations- und Fixiermethoden in farbstarken, grünstichig gelben Tönen in einer Qualität, die derjenigen der Färbungen und Drucke gleich ist, die mit der erfindungsgemäßen Azoverbindung des Beispieles 1 erhalten werden.

Beispiele 6 bis 78

In den nachfolgenden Tabellenbeispielen sind weitere erfindungsgemäße Monoazoverbindungen entsprechend der allgemeinen Formel (1) mit Hilfe ihrer Komponenten, aus denen sie zusammen mit dem Rest des Cyanurchlorids aufgebaut sind, beschrieben. Sie lassen sich aus diesen Aminoverbindungen und Cyanurchlorid und den Kupplungskomponenten in erfindungsgemäßer Weise, wie beispielsweise nach einer in den obigen Beispielen 1 bis 5 beschriebenen Verfahrensvarianten, herstellen. Sie werden vorzugsweise in Form ihrer Alkalimetallsalze, wie Natrium- oder Kaliumsalze, isoliert. Die für sie angegebenen Ausgangskomponenten sind, sofern sie eine Säuregruppe besitzen, in Form der freien Säure angegeben.

Diese erfindungsgemäßen Monoazoverbindungen der Beispiele 6 bis 78 zeigen ebenfalls sehr gute faserreaktive Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel für die Färbung auf Baumwolle angegebenen Farbton.

In den Beispielen 6 bis 78 haben die Formelglieder $Z_1$ bis $Z_6$ folgende Bedeutungen (wobei sie, sofern sie eine saure Gruppe enthalten, in Form der freien Säure angegeben sind):

$Z_1$ ist $-SO_2-CH_2-CH_2-OSO_3H$
$Z_2$ ist $-SO_2-CH_2-CH_2-S-SO_3H$
$Z_3$ ist $-SO_2-CH_2-CH_2-Cl$
$Z_4$ ist $-SO_2-CH=CH_2$
$Z_5$ ist $-SO_2-CH_2-CH_2-O-CO-CH_3$
$Z_6$ ist $-SO_2-CH_2-CH_2-OPO-_3H_2$.

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 6 | 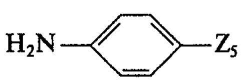 | p-Sulfo-phenoxy | 1,3-Diaminobenzol-4-sulfonsäure | 1,4-Dimethyl-6-hydroxy-2-pyridon-3-sulfonsäure | grünst. gelb |
| 7 | 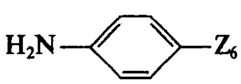 | desgl. | desgl. | desgl. | grünst. gelb |
| 8 | 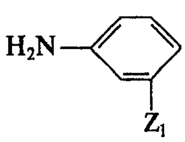 | desgl. | desgl. | desgl. | grünst. gelb |
| 9 | 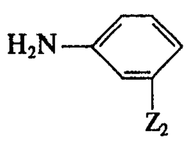 | desgl. | desgl. | desgl. | grünst. gelb |
| 10 | 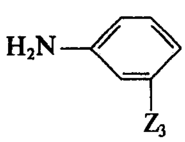 | desgl. | desgl. | desgl. | grünst. gelb |
| 11 | 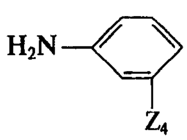 | desgl. | desgl. | desgl. | grünst. gelb |
| 12 | 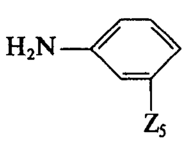 | desgl. | desgl. | desgl. | grünst. gelb |

(Fortsetzung)

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 13 | 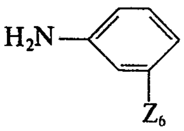 | p-Sulfo-phenoxy | 1,3-Diaminobenzol-4-sulfonsäure | 1,4-Dimethyl-6-hydroxy-2-pyridon-3-sulfonsäure | grünst. gelb |
| 14 | 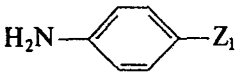 | m-Sulfo-phenoxy | desgl. | desgl. | grünst. gelb |
| 15 | 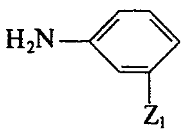 | desgl. | desgl. | desgl. | grünst. gelb |
| 16 | 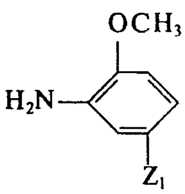 | p-Sulfo-phenoxy | desgl. | desgl. | grünst. gelb |
| 17 | 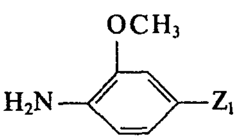 | desgl. | desgl. | desgl. | grünst. gelb |
| 18 | 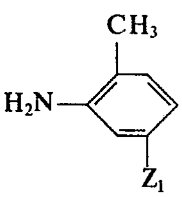 | desgl. | desgl. | desgl. | grünst. gelb |
| 19 | 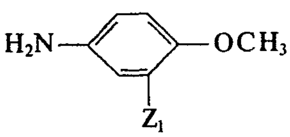 | desgl. | desgl. | desgl. | grünst. gelb |
| 20 | 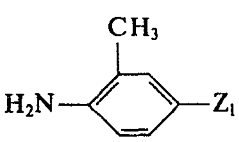 | desgl. | desgl. | desgl. | grünst. gelb |
| 21 | 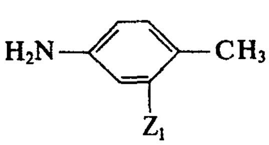 | desgl. | desgl. | desgl. | grünst. gelb |
| 22 | 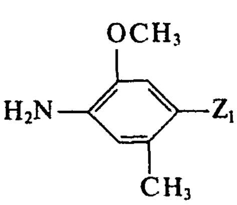 | desgl. | desgl. | desgl. | grünst. gelb |

(Fortsetzung)

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 23 | 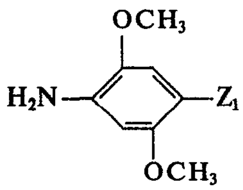 | p-Sulfo-phenoxy | 1,3-Diaminobenzol-4-sulfonsäure | 1,4-Dimethyl-6-hydroxy-2-pyridon-3-sulfonsäure | grünst. gelb |
| 24 | 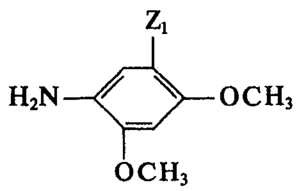 | desgl. | desgl. | desgl. | grünst. gelb |
| 25 | 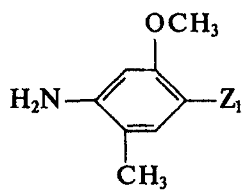 | desgl. | desgl. | desgl. | grünst. gelb |
| 26 | 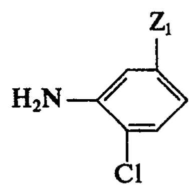 | desgl. | desgl. | desgl. | grünst. gelb |
| 27 | 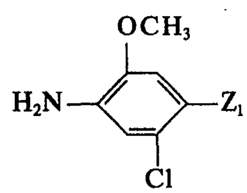 | desgl. | desgl. | desgl. | grünst. gelb |
| 28 | 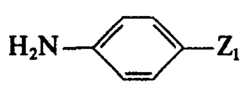 | desgl. | 1,3-Diaminobenzol-4,6-disulfonsäure | desgl. | grünst. gelb |
| 29 | desgl. | m-Sulfo-phenoxy | desgl. | desgl. | grünst. gelb |
| 30 | 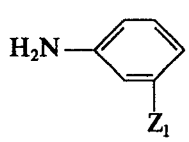 | p-Sulfo-phenoxy | desgl. | desgl. | grünst. gelb |
| 31 | 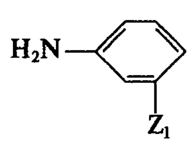 | m-Sulfo-phenoxy | desgl. | desgl. | grünst. gelb |
| 32 | 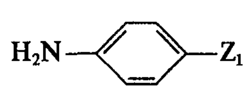 | p-Sulfo-phenoxy | 1,4-Diaminobenzol-2-sulfonsäure | desgl. | rotst. gelb |

(Fortsetzung)

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 33 | 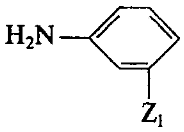 | m-Sulfo-phenoxy | 1,4-Diaminobenzol-2-sulfonsäure | 1,4-Dimethyl-6-hydroxy-2-pyridon-3-sulfonsäure | rotst. gelb |
| 34 | 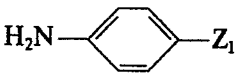 | p-Sulfo-phenoxy | 2,4-Diaminobenzol-6-sulfonsäure | desgl. | grünst. gelb |
| 35 | desgl. | desgl. | 1,3-Diaminobenzol-4-sulfonsäure | 1-Äthyl-4-methyl-6-hydroxy-2-pyridon-3-sulfonsäure | grünst. gelb |
| 36 | desgl. | desgl. | desgl. | 4-Methyl-6-hydroxy-2-pyridon-3-sulfonsäure | grünst. gelb |
| 37 | desgl. | desgl. | desgl. | 1-(β-Hydroxyäthyl)-4-methyl-6-hydroxy-2-pyridon-3-sulfonsäure | grünst. gelb |
| 38 | 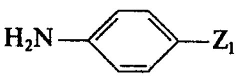 | desgl. | desgl. | 1-(β-Sulfatoäthyl)-4-methyl-6-hydroxy-2-pyridon-3-sulfonsäure | grünst. gelb |
| 39 | desgl. | desgl. | desgl. | desgl. | grünst. gelb |
| 40 | 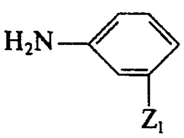 | desgl. | 1,3-Diaminobenzol-4,6-disulfonsäure | 1-Carboxymethyl-4-methyl-6-hydroxy-2-pyridon-3-sulfonsäure | grünst. gelb |
| 41 | 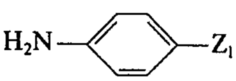 | m-Sulfo-phenoxy | desgl. | 1-(β-Carboxyäthyl)-4-methyl-6-hydroxy-2-pyridon-3-sulfonsäure | grünst. gelb |
| 42 | desgl. | p-Sulfo-phenoxy | 1,4-Diaminobenzol-2,5-disulfonsäure | 1-(β-Acetylaminoäthyl)-4-methyl-6-hydroxy-2-pyridon-3-sulfonsäure | rotst. gelb |
| 43 | desgl. | m-Sulfo-phenoxy | 1,4-Diaminobenzol-2-sulfonsäure | 1-(β-Acetylaminopropyl)-4-methyl-6-hydroxy-2-pyridon-3-sulfonsäure | rotst. gelb |
| 44 | desgl. | p-Sulfo-phenoxy | 1,3-Diaminobenzol-4-sulfonsäure | 4-Methyl-6-hydroxy-2-pyridon | grünst. gelb |
| 45 | desgl. | desgl. | 1,3-Diaminobenzol-4,6-disulfonsäure | 1,4-Dimethyl-6-hydroxy-2-pyridon | grünst. gelb |

(Fortsetzung)

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 46 | 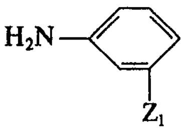 | p-Sulfo-phenoxy | 1,3-Diaminobenzol-4,6-disulfonsäure | 1-Äthyl-4-methyl-6-hydroxy-2-pyridon | grünst. gelb |
| 47 | 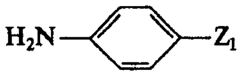 | desgl. | desgl. | 1-(β-Hydroxyäthyl)-4-methyl-6-hydroxy-2-pyridon | grünst. gelb |
| 48 | desgl. | desgl. | 1,3-Diaminobenzol-4-sulfonsäure | 1-(β-Sulfatoäthyl)-4-methyl-6-hydroxy-2-pyridon | grünst. gelb |
| 49 | desgl. | desgl. | desgl. | 1-Carboxymethyl-4-methyl-6-hydroxy-2-pyridon | grünst. gelb |
| 50 | desgl. | desgl. | desgl. | 1-(β-Sulfoäthyl)-4-methyl-6-hydroxy-2-pyridon | grünst. gelb |
| 51 | desgl. | desgl. | desgl. | 1-(β-Carboxyäthyl)-4-methyl-6-hydroxy-2-pyridon | grünst. gelb |
| 52 | desgl. | desgl. | desgl. | 1-(β-Acetylaminoäthyl)-4-methyl-6-hydroxy-2-pyridon | grünst. gelb |
| 53 | desgl. | desgl. | desgl. | 1-(β-Acetylaminopropyl)-4-methyl-6-hydroxy-2-pyridon | grünst. gelb |
| 54 | desgl. | desgl. | 1,4-Diaminobenzol-2-sulfonsäure | 3-Cyan-4-methyl-6-hydroxy-2-pyridon | rotst. gelb |
| 55 | desgl. | desgl. | 1,4-Diaminobenzol-2,5-disulfonsäure | 1,4-Dimethyl-3-cyan-6-hydroxy-2-pyridon | rotst. gelb |
| 56 | desgl. | desgl. | 1,3-Diaminobenzol-4-sulfonsäure | 1-Äthyl-4-methyl-3-cyan-6-hydroxy-2-pyridon | gelb |
| 57 | 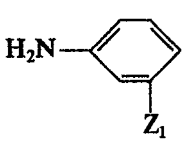 | desgl. | desgl. | 1-(β-Hydroxyäthyl)-3-cyan-4-methyl-6-hydroxy-2-pyridon | gelb |
| 58 | 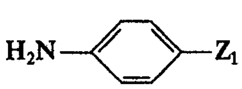 | desgl. | desgl. | 1-(β-Sulfatoäthyl)-3-cyan-4-methyl-6-hydroxy-2-pyridon | gelb |
| 59 | desgl. | desgl. | desgl. | 1-Carboxymethyl-3-cyan-4-methyl-6-hydroxy-2-pyridon | gelb |

(Fortsetzung)

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 60 | 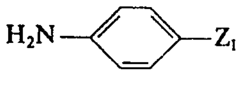 | p-Sulfo-phenoxy | 1,3-Diaminobenzol-4-sulfonsäure | 1-(β-Carboxyäthyl)-3-cyan-4-methyl-6-hydroxy-2-pyridon | gelb |
| 61 | desgl. | desgl. | desgl. | 1-(β-Acetylaminoäthyl)-3-cyan-4-methyl-6-hydroxy-2-pyridon | gelb |
| 62 | desgl. | desgl. | desgl. | 1-(β-Acetylaminopropyl)-3-cyan-4-methyl-6-hydroxy-2-pyridon | gelb |
| 63 | desgl. | desgl. | desgl. | 3-Carbamoyl-4-methyl-6-hydroxy-2-pyridon | grünst. gelb |
| 64 | desgl. | desgl. | desgl. | 1,4-Dimethyl-3-carbamoyl-6-hydroxy-2-pyridon | grünst. gelb |
| 65 | desgl. | desgl. | desgl. | 1-Äthyl-3-carbamoyl-4-methyl-6-hydroxy-2-pyridon | grünst. gelb |
| 66 | desgl. | desgl. | desgl. | 1-(β-Hydroxyäthyl)-3-carbamoyl-4-methyl-6-hydroxy-2-pyridon | grünst. gelb |
| 67 | desgl. | desgl. | desgl. | 1-(β-Sulfatoäthyl)-3-carbamoyl-4-methyl-6-hydroxy-2-pyridon | grünst. gelb |
| 68 | desgl. | desgl. | desgl. | 1-(β-Sulfoäthyl)-3-carbamoyl-4-methyl-6-hydroxy-2-pyridon | grünst. gelb |
| 69 | desgl. | desgl. | desgl. | 1-Carboxymethyl-3-carbamoyl-4-methyl-6-hydroxy-2-pyridon | grünst. gelb |
| 70 | desgl. | desgl. | desgl. | 1-(β-Carboxyäthyl)-3-carbamoyl-4-methyl-6-hydroxy-2-pyridon | grünst. gelb |
| 71 | desgl. | desgl. | desgl. | 1-(β-Acetylaminoäthyl)-3-carbamoyl-4-methyl-6-hydroxy-2-pyridon | grünst. gelb |

(Fortsetzung)

| Bsp. | Amin der allg. Formel (7) | Substituent X | Diaminoverbindung der allg. Formel $H_2N-D-NH_2$ | Pyridonverbindung der allg. Formel (3) | Farbton |
|---|---|---|---|---|---|
| 72 | 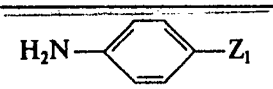 | p-Sulfo-phenoxy | 1,3-Diaminobenzol-4-sulfonsäure | 1-(β-Acetylaminopropyl)-3-carbamoyl-4-methyl-6-hydroxy-2-pyridon | grünst. gelb |
| 73 | desgl. | desgl. | desgl. | 3-Sulfomethyl-4-methyl-6-hydroxy-2-pyridon | grünst. gelb |
| 74 | desgl. | desgl. | desgl. | 3-Sulfomethyl-1,4-dimethyl-6-hydroxy-2-pyridon | grünst. gelb |
| 75 | desgl. | desgl. | 1,3-Diaminobenzol-4,6-disulfonsäure | desgl. | grünst. gelb |
| 76 | desgl. | desgl. | desgl. | 1-Äthyl-3-sulfomethyl-4-methyl-6-hydroxy-2-pyridon | grünst. gelb |
| 77 | desgl. | desgl. | 1,3-Diaminobenzol-4-sulfonsäure | desgl. | grünst. gelb |

## Anwendungsbeispiel 1

20 Teile der erfindungsgemäßen Verbindung (als Natriumsalz) von Beispiel 1 werden zusammen mit 50 Teilen Harnstoff in 300 Teilen Wasser gelöst. Die Lösung wird unterhalb von 40°C in 400 Teile einer neutralen, wäßrigen 4%igen Alginatverdickung eingerührt. Man gibt 10 Teile Natriumcarbonat hinzu und füllt das Ganze mit der 4%igen wäßrigen Alginatverdickung auf eine Gesamtmenge von 1000 Teilen auf. Man rührt gut durch und bedruckt mit der so hergestellten Druckpaste ein Baumwollgewebe, das nach dem Trocknen bei 60°C in einem handelsüblichen Dämpfaggregat 5 Minuten lang mit Sattdampf von 100 bis 103°C behandelt wird. Der so hergestellte Druck wird anschließend durch Spülen mit kaltem und heißem Wasser, durch Waschen mit einem neutralen Waschmittel und nochmaliges Spülen mit Wasser fertiggestellt. Nach dem Trocknen der Ware erhält man einen farbstarken grünstichig gelben Druck von sehr guter Lichtechtheit und von sehr guten Naßechtheitseigenschaften.

## Anwendungsbeispiel 2

Ein Gewebe aus mercerisierter Baumwolle wird mit einer wäßrigen Färbeflotte von 20°C bei einer Flottenaufnahme von 80%, bezogen auf das Warengewicht, geklotzt, die im Liter 20 g Natriumsalz der erfindungsgemäßen Azoverbindung von Beispiel 1 sowie 18 g 33%ige Natronlauge enthält. Das geklotzte Gewebe wird auf eine Docke gewickelt, in eine Folie eingeschlagen und acht Stunden bei Raumtemperatur liegengelassen. Anschließend wird es durch Spülen mit kaltem Wasser, durch Behandeln mit einem wenig Essigsäure enthaltenden wäßrigen Bad und durch nochmaliges Spülen in kaltem und heißem Wasser fertiggestellt. Nach dem Trocknen erhält man eine farbstarke grünstichig gelbe Färbung von sehr guter Lichtechtheit und von sehr guten Naßechtheiten.

Anwendungsbeispiel 3

100 Teile eines Gewebes aus mercerisierter Baumwolle werden 10 Minuten lang bei 60°C in 3000 Volumenteilen eines wäßrigen Färbebades behandelt, das 5 Teile des Natriumsalzes der erfindungsgemäßen Verbindung von Beispiel 1 sowie 150 Teile wasserfreies Natriumsulfat enthält. Nach dieser 10minütigen Behandlung werden 15 Teile wasserfreies Natriumcarbonat und 4 Teile 33%ige Natronlauge zugesetzt. Die Färbung wird 60 Minuten bei 60°C weitergeführt. Anschließend wird das gefärbte Gewebe in üblicher Weise, wie beispielsweise im Anwendungsbeispiel 2, fertiggestellt. Man erhält eine farbstarke, grünstichig gelbe Färbung von sehr guter Lichtechtheit und von sehr guten Naßechtheiten.

Anwendungsbeispiel 4

100 Teile eines Wollgewebes werden in ein 40°C warmes wäßriges Färbebad eingebracht, das aus 3000 Teilen Wasser, 2 Teilen des Natriumsalzes der im Beispiel 1 beschriebenen erfindungsgemäßen Verbindung, 0,15 Teilen eines Anlagerungsproduktes von 12 Mol Äthylenoxid an 1 Mol Stearylamin, 2 Teilen Ammoniumacetat und 2 Teilen 60%iger wäßriger Essigsäure besteht. Die Färbetemperatur wird innerhalb von 30 Minuten auf Kochtemperatur erhöht und die Färbung anschließend 60 Minuten lang bei 100°C weitergeführt. Nach dem üblichen Auswaschen und Fertigstellen der erhaltenen Wollfärbung zeigt dieses Wollgewebe einen farbstarken, grünstichig gelben Farbton von sehr guter Lichtechtheit und von sehr guten Naßechtheiten.

Anwendungsbeispiel 5

Man verfährt in der im Anwendungsbeispiel 4 angegebenen Färbeweise, ersetzt jedoch das Wollgewebe durch 100 Teile eines Gewebes aus einer ε-Polycaprolactam-Faser. Man erhält ebenfalls eine farbstarke, grünstichig gelbe Färbung von guten Gebrauchsechtheiten.

Gemäß den obigen Anwendungsbeispielen lassen sich auch die anderen, hier in den Ausführungsbeispielen und Tabellenbeispielen beschriebenen erfindungsgemäßen Monoazoverbindungen in die Färbe- und Druckverfahren einsetzen. In analoger Weise erhält man beispielsweise mit diesen in den Anwendungsbeispielen 1 bis 5 beschriebenen Färbe- und Druckmethoden mit einem anderen Farbstoff der vorliegenden Erfindung ebenfalls sehr farbstarke Färbungen und Drucke von guten Licht- und Naßechtheitseigenschaften in den Farbtönen, die für das jeweilige Ausführungs- oder Tabellenbeispiel angegeben sind.

**Patentansprüche**

1. Wasserlösliche Monoazoverbindungen entsprechend der allgemeinen Formel (1)

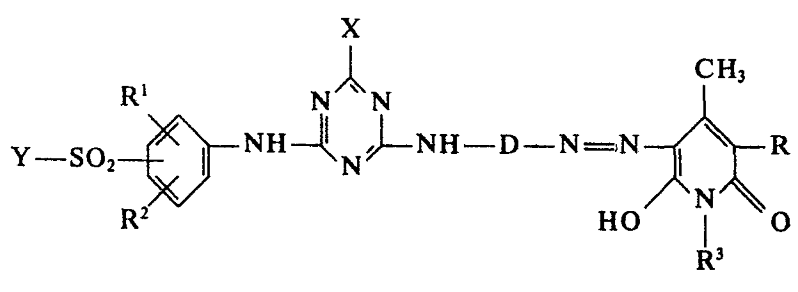

in welcher bedeuten:

- R¹ ist ein Wasserstoffatom, eine niedere Alkylgruppe, eine niedere Alkoxygruppe oder ein Chloratom;
- R² ist ein Wasserstoffatom, eine niedere Alkylgruppe oder eine niedere Alkoxygruppe;
- R³ ist ein Wasserstoffatom oder eine niedere Alkylgruppe, die durch eine Hydroxygruppe, eine niedere Alkanoylaminogruppe, eine Sulfatogruppe, eine Carboxygruppe oder eine Sulfogruppe substituiert sein kann;
- R ist ein Wasserstoffatom, die Sulfomethylgruppe, die Carbamoylgruppe, die Cyangruppe oder die Sulfogruppe;
- D ist der m- oder p-Phenylenrest, der durch eine oder zwei Sulfogruppen oder durch eine oder zwei Sulfogruppen und eine niedere Alkylgruppe substituiert ist;
- X ist eine Monosulfophenoxy-Gruppe;

Y ist die Vinylgruppe oder eine Äthylgruppe, die in β-Stellung einen als Anion alkalisch eliminierbaren Rest gebunden enthält;
die Formelglieder $R^1$, $R^2$, $R^3$ und R können zueinander gleiche oder voneinander verschiedene Bedeutungen haben.

2. Verbindungen nach Anspruch 1, dadurch gekennzeichnet, daß $R^3$ hier für ein Wasserstoffatom steht.

3. Verbindungen nach Anspruch 1, dadurch gekennzeichnet, daß $R^3$ hier für eine Alkylgruppe von 1 bis 3 C-Atomen steht, die durch eine Sulfogruppe substituiert sein kann.

4. Verbindungen nach Anspruch 1, 2 oder 3, dadurch gekennzeichnet, daß R hier eine Sulfogruppe oder die Cyangruppe bedeutet.

5. Verbindungen nach Anspruch 1, 2, 3 oder 4, dadurch gekennzeichnet, daß D hier der meta- oder para-Phenylenrest ist, der durch eine oder zwei Sulfogruppen substituiert ist.

6. Verbindungen nach einem der Ansprüche 1 bis 5, dadurch gekennzeichnet, daß die Gruppe $-SO_2-Y$ hier für die β-Sulfatoäthylsulfonyl-Gruppe oder für die Vinylsulfonylgruppe, jeweils in meta- oder para-Stellung zur Aminogruppe an den Benzolkern gebunden, steht.

7. Verbindungen nach Anspruch 1, 2 oder 3, in welcher $R^1$ ein Wasserstoffatom ist, $R^2$ ein Wasserstoffatom oder eine Methoxy- oder Methylgruppe ist, die Gruppe $-SO_2-Y$ für die β-Sulfatoäthylsulfonyl-Gruppe oder Vinylsulfonylgruppe steht und in m- oder p-Stellung zur Aminogruppe an den Benzolkern gebunden ist, $R^3$ gemäß Anspruch 2 ein Wasserstoffatom oder $R^3$ eine Alkylgruppe von 1 bis 4 C-Atomen ist, die durch eine Carboxy-, Sulfo- oder Acetylamino- oder Propionylaminogruppe substituiert sein kann, oder gemäß Anspruch 3 eine Alkylgruppe von 1 bis 3 C-Atomen ist, die durch eine Sulfogruppe substituiert sein kann, R die Sulfo- oder Cyangruppe bedeutet, D der Phenylenrest ist, der durch eine oder zwei Sulfogruppen substituiert ist, und X die in Anspruch 1 genannte Bedeutung hat.

8. Verbindungen nach Anspruch 1 der allgemeinen Formel

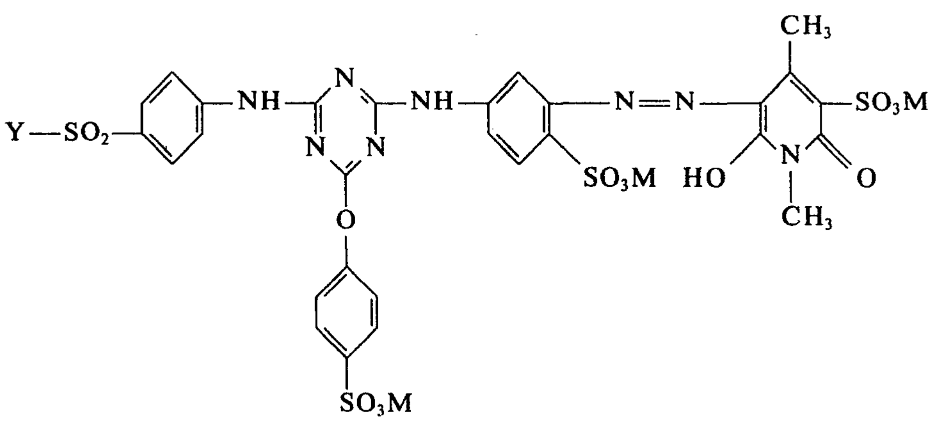

in welcher Y die in Anspruch 1 genannte Bedeutung besitzt und M ein Wasserstoffatom oder das Äquivalent eines ein-, zwei- oder dreiwertigen Metalls ist.

9. Verbindungen nach Anspruch 1 der allgemeinen Formel

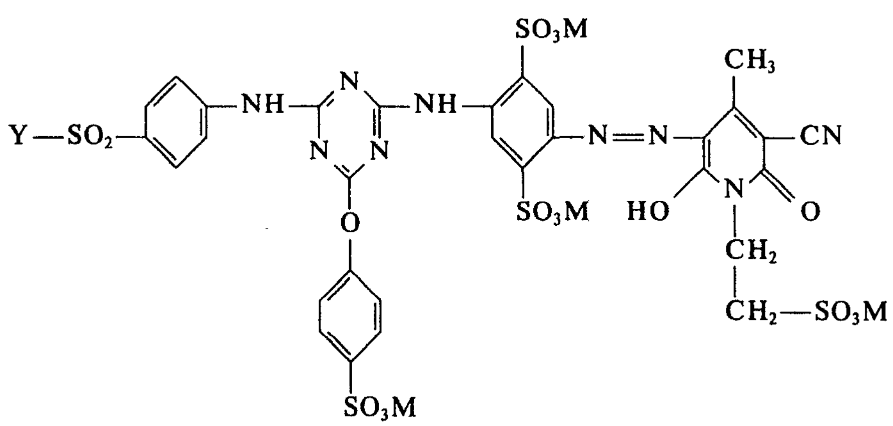

in welcher Y die in Anspruch 1 genannte Bedeutung besitzt und M ein Wasserstoffatom oder das Äquivalent eines ein-, zwei- oder dreiwertigen Metalls ist.

10. Verbindungen nach Anspruch 8 oder 9, dadurch gekennzeichnet, daß Y die Vinyl- oder eine β-Sulfatoäthyl-Gruppe ist.

11. Die Natrium- oder Kaliumsalze der Verbindungen von Anspruch 1, 8 oder 9.

12. Verfahren zur Herstellung der in Anspruch 1 genannten und definierten Azoverbindungen der allgemeinen Formel (1), dadurch gekennzeichnet, daß man eine Diazoniumverbindung eines Amins der allgemeinen Formel (2)

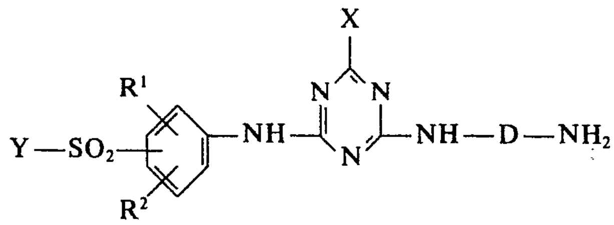

(2)

in welcher $R^1$, $R^2$, D, X und Y die in Anspruch 1 genannten Bedeutungen haben, mit einer Pyridonverbindung der allgemeinen Formel (3)

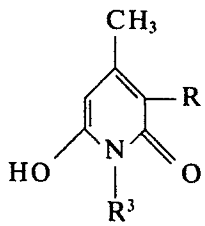

(3)

in welcher R und $R^3$ die in Anspruch 1 genannten Bedeutungen haben, kuppelt, oder daß man eine Aminoazoverbindung der allgemeinen Formel (4)

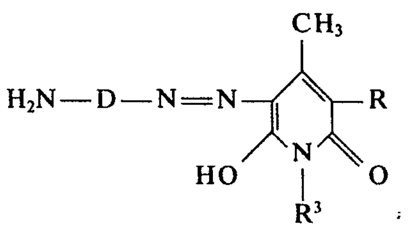

(4)

in welcher D, R und $R^3$ die in Anspruch 1 genannten Bedeutungen haben, mit einer Monochlortriazin-Verbindung der allgemeinen Formel (5)

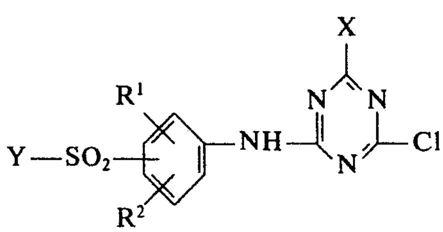

(5)

in welcher $R^1$, $R^2$, X und Y die in Anspruch 1 genannten Bedeutungen haben, umsetzt.

13. Abänderung des Verfahrens nach Anspruch 12 zur Herstellung von in Anspruch 1 genannten und definierten Verbindungen der allgemeinen Formel (1), in welcher jedoch Y für einen Äthylrest steht, der in β-Stellung durch eine Estergruppe vorzugsweise Sulfatogruppe, substituiert ist, dadurch gekennzeichnet, daß in den in Anspruch 12 genannten Ausgangsverbindungen der Formelrest Y für die β-Hydroxyäthyl-Gruppe steht und daß man die erhaltene Azoverbindung entsprechend der allgemeinen Formel (1), in welcher jedoch Y den β-Hydroxyäthyl Rest bedeutet, mit einem Veresterungs- oder Acylierungsmittel, vorzugsweise Sulfatierungsmittel, umsetzt.

14. Verwendung der Verbindungen von Anspruch 1 zum Färben von hydroxy- und/oder carbonamidgruppenhaltigen Materialien, insbesondere Fasermaterialien.

**Claims**

1. Water-soluble monoazo compounds corresponding to the general formula (1) in which:

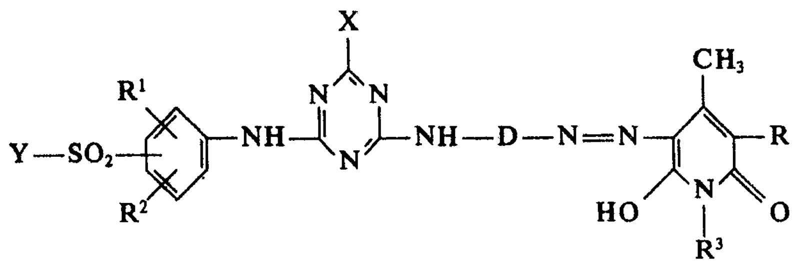

$R^1$ is a hydrogen atom, a lower alkyl group, a lower alkoxy group or a chlorine atom;
$R^2$ is a hydrogen atom, a lower alkyl group or a lower alkoxy group;
$R^3$ is a hydrogen atom or a lower alkyl group which can be substituted by a hydroxy group, a lower alkanoylamino group, a sulfato group, a carboxy group or a sulfo group;
R is a hydrogen atom, the sulfomethyl group, the carbamoyl group, the cyano group or the sulfo group;
D is the m- or p-phenylene radical which are substituted by one or two sulfo groups or by one or two sulfo groups and one lower alkyl group;
X is a monosulfophenoxy group;
Y is the vinyl group, or an ethyl group which, in the $\beta$-position, contains a radical capable of being eliminated under alkaline conditions as an anion;
the formula moieties $R^1$, $R^2$, $R^3$ and R have meanings which are identical to or different from one another.

2. Compounds according to claim 1, characterized in that $R^3$ represents a hydrogen atom.
3. Compounds according to claim 1, characterized in that $R^3$ is an alkyl group of 1 to 3 C-atoms, which can be substituted by a sulfo group.
4. Compounds according to claim 1, 2 or 3, characterized in that R is a sulfo group or the cyano group.
5. Compounds according to claim 1, 2, 3 or 4, characterized in that D is the meta- or para-phenylene radical, both being substituted by one or two sulfo groups.
6. Compounds according to any of claims 1 to 5, characterized in that the group $-SO_2-$ Y represents the $\beta$-sulfatoethyl-sulfonyl group or the vinylsulfonyl group which are bonded to the benzene nucleus in the meta- or para-position relative to the amino group.
7. Compounds according to claim 1, 2 or 3, in which $R^1$ is a hydrogen atom, $R^2$ is a hydrogen atom or a methoxy or methyl group, the group $-SO_2-Y$ represents the $\beta$-sulfatoethylsulfonyl group or vinylsulfonyl group and is bonded to the benzene nucleus in m- or p-position relative to the amino group, $R^3$ is, in accordance with claim 2, a hydrogen atom, or $R^3$ is an alkyl group of 1 to 4 C-atoms which can be substituted by a carboxy, sulfo or acetylamino or propionylamino group, or is, in accordance with claim 3, an alkyl group of 1 to 3 C-atoms, which can be substituted by a sulfo group, R denotes the sulfo or cyano group, D is the m- or p-phenylene radical which is substituted by one or two sulfo groups, and X has the meanings mentioned in claim 1.
8. Compounds according to claim 1 of the general formula

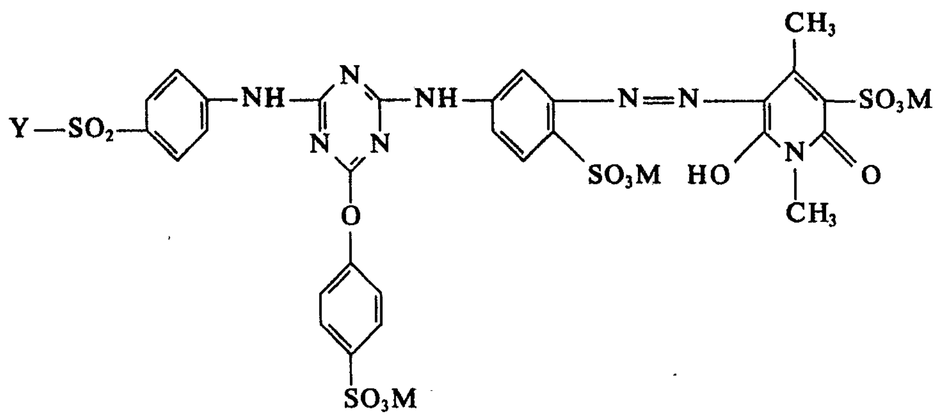

in which Y has the meanings mentioned in claim 1, and M is a hydrogen atom or the equivalent of mono- di- or trivalent metal.

9. Compounds according to claim 1 of the general formula

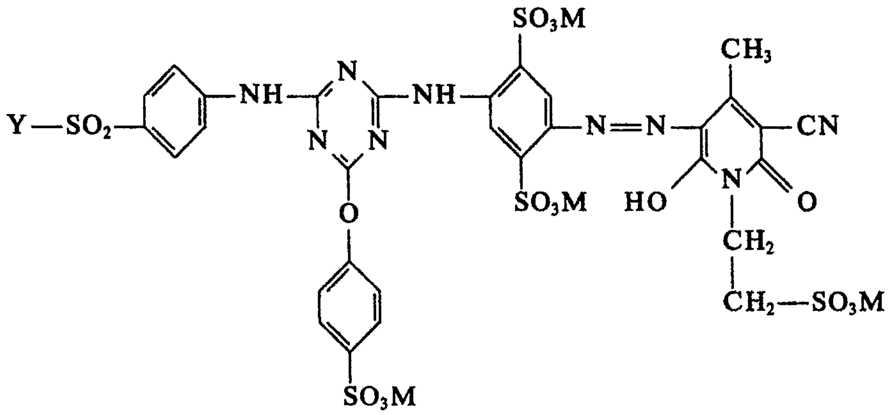

in which Y has the meanings mentioned in claim 1, and M is a hydrogen atom or the equivalent of mono-, di- or trivalent metal.

10. Compounds according to claim 8 or 9, characterized in that Y is the vinyl or a $\beta$-sulfatoethyl group.

11. The sodium or potassium salts of the compounds of claim 1, 8 or 9.

12. A process for the preparation of the azo compounds of the formula (1) mentioned and defined in claim 1, characterized by that a diazonium compound of an amine of the general formula (2)

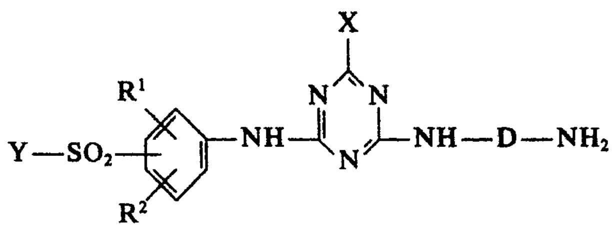

(2)

in which $R^1$, $R^2$, D, X and Y have the meanings mentioned in claim 1, is coupled with a pyridone compound of the general formula (3)

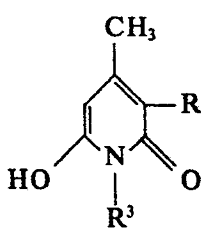

(3)

in which R and $R^3$ have the meanings mentioned in claim 1, or that an aminoazo compound of the general formula (4)

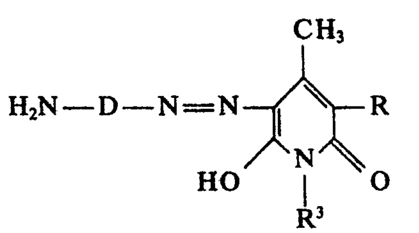

(4)

in which D, R and $R^3$ have the meanings mentioned in claim 1, is reacted with a monochlorotriazine compound of the general formula (5)

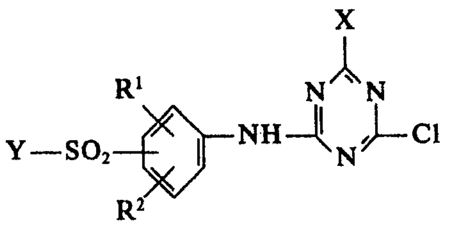

(5)

in which $R^1$, $R^2$, X and Y have the meanings mentioned in claim 1.

13. A modification of the process of claim 12 for the preparation of the compounds of the formula (1), mentioned and defined in claim 1, in which, however, Y represents an ethyl radical which is substituted in the $\beta$-position by an ester group, preferably by a sulfato group, characterized in that the formula radical Y of the starting compounds mentioned in claim 12 represents the $\beta$-hydroxyethyl group, and that the azo compound obtained and corresponding to the general formula (1) in which, however, Y denotes the $\beta$-hydroxyethyl radical, is reacted with an esterifying or acylating agent, preferably a sulfating agent.

14. The use of the compounds of claim 1 for dyeing hydroxy- and/or carboxamide-containing materials, in particular fiber materials.

**Revendications**

1. Composés monoazoïques hydrosolubles, répondant à la formule générale (1):

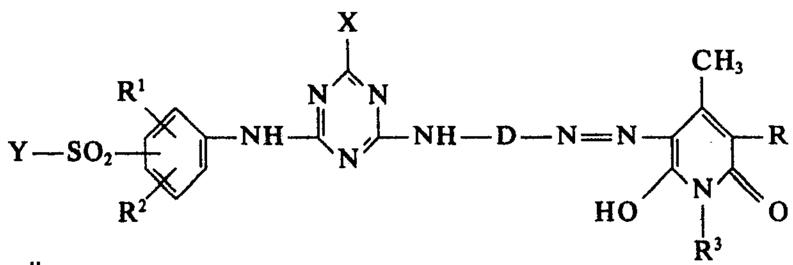

dans laquelle:

$R^1$ représente un atome d'hydrogène, un groupe alkyle inférieur, un groupe alcoxy inférieur ou un atome de chlore;

$R^2$ représente un atome d'hydrogène, un groupe alkyle inférieur ou un groupe alcoxy inférieur;

$R^3$ représente un atome d'hydrogène ou un groupe alkyle inférieur qui peut être substitué par un groupe hydroxyle, par un groupe alcanoylamino inférieur, par un groupe sulfato, par un groupe carboxyle ou par un groupe sulfo;

R représente un atome d'hydrogène, le groupe sulfométhyle, le groupe carbamoyle, le groupe cyano ou le groupe sulfo;

D représente le radical m- ou p-phénylène, qui est substitué par un ou deux groupes sulfo ou par un ou deux groupes sulfo et par un groupe alkyle inférieur;

X est un groupe monosulfophénoxy;

Y représente le groupe vinyle ou un groupe éthyle, qui contient, fixé en position bêta, un radical éliminable par voie alcaline comme anion;

les symboles $R^1$, $R^2$, $R^3$ et R peuvent être identiques entre eux ou présenter des significations différentes de l'un à l'autre.

2. Composés selon la revendication 1, caractérisés en ce que $R^3$ représente ici un atome d'hydrogène.

3. Composés selon la revendication 1, caractérisés en ce que $R^3$ représente ici un groupe alkyle ayant 1 à 3 atomes de carbone, qui peut être substitué par un groupe sulfo.

4. Composés selon la revendication 1, 2 ou 3, caractérisés en ce que R représente un groupe sulfo ou le groupe cyano.

5. Composés selon la revendication 1, 2, 3 ou 4, caractérisés en ce que D représente le radical méta- ou paraphénylène, qui est substitué par un ou deux groupes sulfo.

6. Composés selon l'une des revendications 1 à 5, caractérisés en ce que le groupe $-SO_2-Y$ représente ici le groupe sulfato-bêta éthylsulfonyle ou le groupe vinylsulfonyle, fixé chaque fois en position méta ou para du noyau benzénique par rapport au groupe amino.

7. Composés selon la revendication 1, 2 ou 3, dans lesquels $R^1$ représente un atome d'hydrogène, $R^2$ représente un atome d'hydrogène ou un groupe méthoxy ou méthyle, le groupe $-SO_2-Y$ représente le groupe sulfato-bêta éthylsulfonyle ou le groupe vinylsulfonyle et est fixé sur le noyau benzénique en position méta ou para par rapport au groupe amino, $R^3$ représente selon la revendication 2 un atome d'hydrogène ou bien $R^3$ représente un groupe alkyle ayant 1 à 4 atomes de carbone qui peut être substitué par un groupe carboxyle, par un groupe sulfo ou acétylamino ou propionylamino, ou selon la revendication 3 $R^3$ représente un groupe alkyle ayant 1 à 3 atomes de carbone qui peut être substitué par un groupe sulfo, R représente le groupe sulfo ou cyano, D le radical phénylène, qui est substitué par un ou deux groupes sulfo, et X a le sens indiqué à la revendication 1.

8. Composés selon la revendication 1, de formule générale:

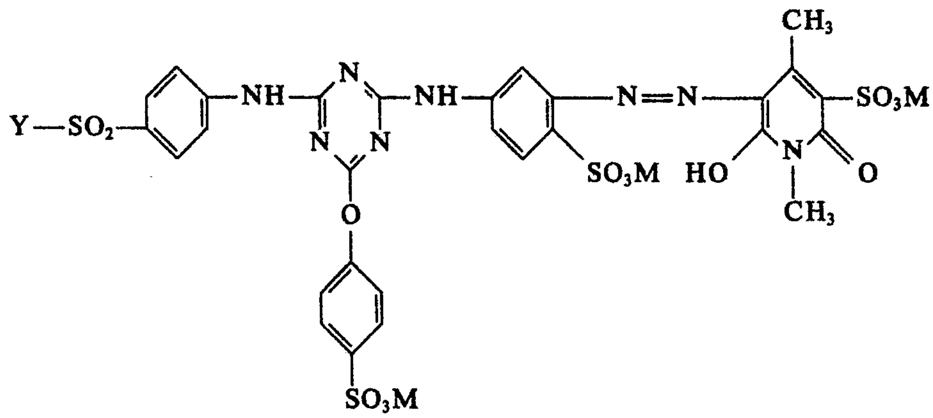

dans laquelle Y a le sens indiqué à la revendication 1 et M est un atome d'hydrogène ou l'équivalent d'un métal mono-, di- ou tri-valent.

9. Composés selon la revendication 1, de formule générale:

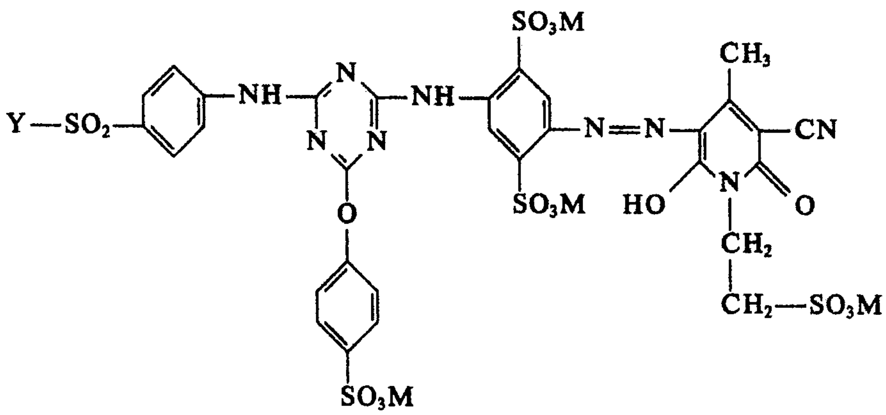

dans laquelle Y a le sens indiqué à la revendication 1 et M est un atome d'hydrogène ou l'équivalent d'un métal mono-, di- ou tri-valent.

10. Composés selon la revendication 8 ou 9, caractérisés en ce que Y représente le groupe vinyle ou un groupe sulfato-bêta éthyle.

11. Sels de sodium ou de potassium des composés de la revendication 1, 8 ou 9.

12. Procédé de préparation des composés azoïques définis et cités à la revendication 1, de formule générale (1), caractérisé en ce qu'on copule un composé de diazonium dérivé d'une amine de formule générale (2)

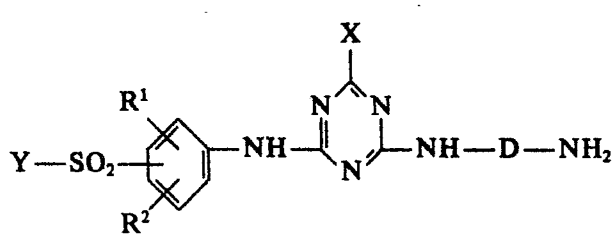

(2)

(dans laquelle $R^1$, $R^2$, D, X et Y ont les sens indiqués à la revendication 1) avec une pyridone de formule générale (3):

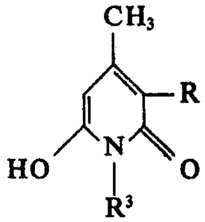

(3)

(dans laquelle R et $R^3$ ont les sens indiqués à la revendication 1), ou l'on fait réagir un composé aminoazoïque de formule générale (4):

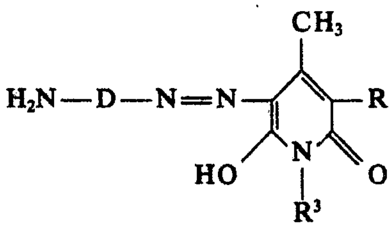

(4)

(dans laquelle D, R et $R^3$ ont le sens indiqué à la revendication 1) avec une monochlorotriazine de formule générale (5):

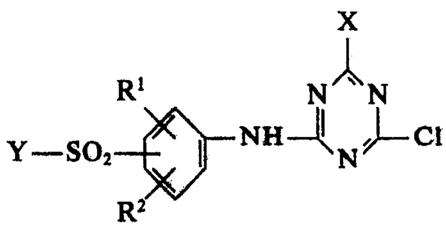

(5)

dans laquelle $R^1$, $R^2$, X et Y ont les sens indiqués à la revendication 1.

13. Variante du procédé selon la revendication 12 pour préparer des composés définis et cités à la revendication 1, de formule générale (1), dans laquelle cependant Y représente un radical éthyle qui est substitué en position bêta par un groupe ester, avantageusement un groupe sulfato, caractérisée en ce que, dans les composés de départ cités à la revendication 12, le symbole Y représente le groupe hydroxy-bêta éthyle, et en ce qu'on fait réagir le composé azoïque obtenu, répondant à la formule générale (1), mais dans laquelle Y représente le radical hydroxy-bêta éthyle, avec un agent d'estérification ou d'acylation, de préférence un agent de sulfatation.

14. Utilisation des composés de la revendication 1 pour teindre des matières contenant des groupes hydroxyles et/ou carboxamides, en particulier des matières fibreuses.